# EUROPEAN PATENT SPECIFICATION

(11) **EP 1 837 552 B1**
(45) Date of publication and mention of the grant of the patent: **14.07.2010**
(21) Application number: 07005323.6
(22) Date of filing: 14.03.2007
(51) Int. Cl.: F16G 13/02, F16G 5/18

(54) **Power transmission chain and power transmission system**
Kraftübertragungskette und Kraftübertragungssystem
Chaîne et système de transmission de puissance

(30) Priority: 24.03.2006 JP 2006082017
(43) Date of publication of application: 26.09.2007
(73) Proprietor: JTEKT Corporation, Osaka-shi Osaka 542-8502 (JP)
(72) Inventor: Miura, Yoshihisa, Osaka-shi, Osaka 542-8502 (JP)
(74) Representative: Schaeberle, Steffen

(56) References cited:
- JP-A- 2006 002 787
- US-A- 4 522 613
- US-A- 5 941 059
- US-B1- 6 277 046

## Description

### 1. Field of the Invention

The present invention relates to a power transmission chain and more particularly to a power transmission chain which is preferable for use on a continuously variable transmission (CVT) for a vehicle such as a motor vehicle and a power transmission.

### 2. Related Art

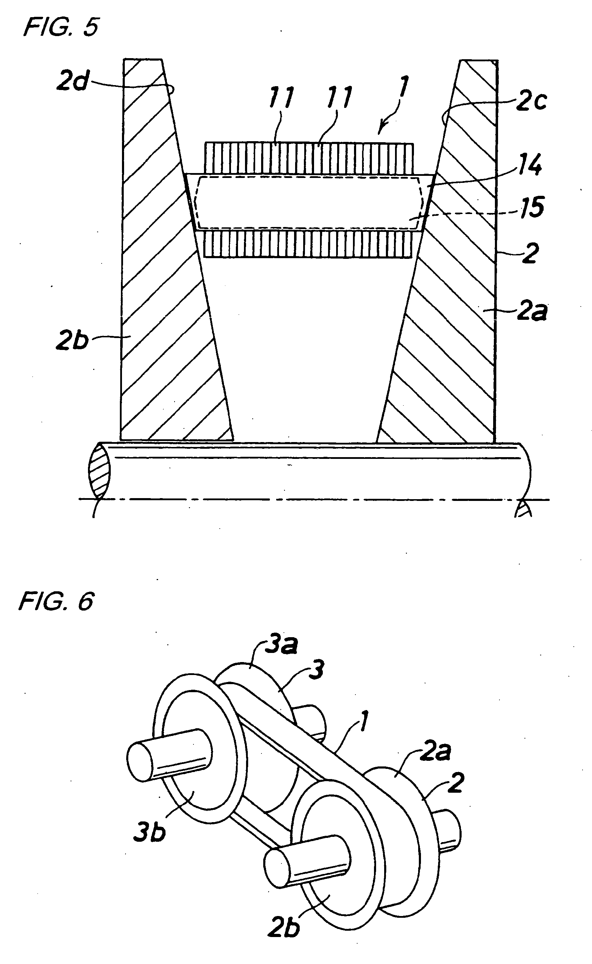

As an automotive continuously variable transmission, there is known a continuously variable transmission as is shown in Fig. 6 which is made up of a drive pulley (2) having a fixed sheave (2a) and a movable sheave (2b) and provided on an engine's side, a driven pulley (3) having a fixed sheave (3b) and a movable sheave (3a) and provided on a drive wheels' side and an endless power transmission chain (1) which is provided in such a way as to be extended between the drive and driven pulleys and in which the movable sheaves (2b)(3a) are made to move towards and away from the fixed sheaves (2a)(3b), respectively, by a hydraulic actuator to thereby clamp the chain (1) hydraulically, whereby a contact load is generated between the pulleys (2) (3) and the chain (1) by virtue of the clamping force, so as to transmit torque by virtue of frictional force generated at the contact portions between the pulleys (2) (3) and the chain (1).

As a power transmission chain, there is proposed in JP-A-2006-002787 a power transmission chain including a plurality of links each having front and rear openings through which pins are to be passed, and a plurality of first pins and a plurality of second pins which are adapted to connect together the links which are arranged in a chain width direction with a front opening of one link made to coincide with a rear opening of one other link such that the links so arranged are enabled to flex to one another in a longitudinal direction, wherein a longitudinal flexure of one link to one other link is enabled by a relative rolling contact motion between the first pin which is fixed in a front opening of one line and movably fitted in a rear opening of on other link and the second pin which is movably fitted in the front opening of the one link and is fixed in the rear opening of the one other link. In this patent document, the fixing of the link and the pin is implemented by a press fit at edges of portions of the opening of the link which intersect the longitudinal direction at right angles (upper and lower edges of the pin), and the radius of circular arc portions at the upper and lower edges of the pin is made to be equal to or smaller than the radius of circular arc portions on the opening's side.

According to the power transmission chain of JP-A-2006-002787, positioning at the time of press fit needs to be implemented strictly accurately in order to prevent the pin from being caused to move out of its designed proper position relative to the link at the time of assemblage, and hence an enhancement in assemblage of the pin to the link is desired.

US-A-4 522 613 discloses a link-type V-belt where two pins are employed at each intersection between links with the pins being semi-cylindrical for rolling contact between pins and for pivotal movement with the associated link.

### SUMMARY OF THE INVENTION

An object of the invention is to provide a power transmission chain which can prevent the pin from being caused to move out of its designed proper position relative to the link at the time of assemblage to thereby enhance the assemblage of the pin to the link and a power transmission system which utilizes the power transmission chain.

According to the invention, there is provided a power transmission chain including:
a plurality of links each having a first opening and a second opening which are arranged along a chain longitudinal direction and through which pins are to be passed; and
plural pairs of first pins and second pins, in each pair of which the first pin and the second pin are arranged along the chain longitudinal direction and couple adjacent two of the links overlapped in a chain width direction such that the first opening of one of said adjacent two links coincides with the second opening of the other of said adjacent two links;
wherein the first pin is fixed in the first opening of said one link and movably fitted in the second opening of the other link, and the second pin is movably fitted in the first opening of said one link and fixed in the second passage of the other link, and the first pin and the second pin are in contact with each other with a relative rolling contact motion, so that said adjacent two links are pivotally bendable in the chain longitudinal direction,
wherein each of the first pin and the first opening has a part of a cross section thereof which is defined by a straight-line portion and circular arc portions which connect to upper and lower ends of the straight-line portion, and
a press fit margin is provided between the matching circular arc portions of the first pin and the first opening, such that a length L_{D} of the straight-line portion of the first pin and a length L_{L} of the straight-line portion of the first opening satisfy L_{L} ≧ L_{D}, so that a force applied from the corresponding link to the first pin at the time of press fit is applied in a direction in which the straight-line portions are brought into surface abutment with each other.

The pins are fixed in the openings of the link through the fitting of the pins in inner circumferential edges of the openings on their outer circumferential surfaces as a result of mechanical press fitting. The first pin and the second pin are fitted together in the single opening such that the pins face each other in the longitudinal direction of the chain, and either of the pins is press fitted in a circumferential surface of the opening.

Conventionally, in positioning pins relative to a link at the time of press fitting, only the shapes of circular arc portions between which a press fit margin is provided are taken into consideration, and a force which is to be applied to the pins from the link, is designed to be applied in a direction of a line which connects centers of the circular arc portions. In contrast to this, according to the power transmission chain of the invention, the certain relationship is made to be provided between the length of the straight-line portion of the pin and the length of the straight-line portion of the opening, and the force which is to be applied to the pins from the link at the time of press fitting is designed to be applied obliquely relative to the direction of the line which connects the centers of the circular arc portions so that the straight-line portions are brought into surface abutment with each other.

Although the shapes themselves of the circular arc portions are not limited to any particular shapes, for example, letting the radius of the circular arc portions which connect to the upper and lower ends of the straight-line portion of the pin be R_{D}, and the radius of the circular arc portions which connect to the upper and lower ends of the straight-line portion of the opening R_{L}, R_{L} < R_{D}. By adopting this configuration, the direction of force that is to be applied to the pins from the link at the time of press fitting can be inclined relative to the direction of the line which connects the centers of the circular arc portions. As this occurs, a slight gap is produced between the link and the pin at a boundary portion between the straight-line portions and the circular arc portions, whereby a relative line contact (a point contact in cross section) results when the circular arc portions are brought into contact with each other, while in the conventional example, a relative surface contact (a line contact in cross section) results when the same condition is brought about. Note that the radius of the circular arc portion which connects to the upper end of the straight-line portion of the pin and the radius of the circular arc portion which connects to the lower end of the straight-line portion of the pin may be the same or different from each other, and similarly, the radius of the circular arc portion which connects to the upper end of the opening and the radius of the circular arc portion which connects to the lower end of the opening may be the same or different from each other.

In the power transmission chain according to the invention, at least either of the first pin and the second pin is brought into contact with the pulleys so as to transmit power by virtue of frictional force. In a chain in which either of pins is brought into contact with the pulleys, when the chain is used on a continuously variable transmission, either of the first pin and the second pin becomes a pin which is brought into contact with the pulleys (hereinafter, referred to as a "pin"), whereas the other pin becomes a pin which is not brought into contact with the pulleys (referred to as an inter-piece or strip, and hereinafter, referred to as an "inter-piece").

The link is made of, for example, spring steel or carbon tool steel. The material of the link is not limited to spring steel and carbon tool steel, and hence other steels such as bearing steel may be used. In the link, the front and rear passage potions may be made up of independent through holes (a pillared link), or the front and rear openings may be formed into a single through hole (a pillarless link). Appropriate steel such as bearing steel is used as the material of the pins.

The first pin and the second pin are formed such that either of contact surfaces thereof is formed into a flat surface, while the other contact surface is formed into an involute curve surface which enables a rolling contact motion. In addition, the first pin and the second pin may be formed such that respective contact surfaces of the first pin and the second pin are formed into required curved surfaces.

The power transmission chain is preferably such that either of the pins (the inter-piece) is made shorter than the other pin (the pin), and end faces of the longer pin are brought into contact with circular conical sheave surfaces of pulleys of a continuously variable transmission, so as to transmit power by virtue of frictional force produced by such a contact. Each pulley is made up of a fixed sheave having a circular conical sheave surface and a movable sheave having a circular conical sheave surface which oppositely faces the sheave surface of the fixed sheave, and the chain is held between the sheave surfaces of both the sheaves, whereby a distance between the sheave surfaces of the continuously variable transmission and hence the wrap contact radius of the chain is changed by moving the movable sheave by a hydraulic actuator, thereby making it possible to implement a continuously variable gearshift through a smooth operation.

A power transmission system according to the invention includes a first pulley having sheave surfaces which are each formed into a circular conical surface, a second pulley having sheave surfaces which are each formed into a circular conical surface and a power transmission chain which is provided in such a way as to be extended between the first and second pulleys, wherein the power transmission chain is either of the power transmission chains described above.

This power transmission system becomes preferable for use as a continuously variable transmission (CVT) for a vehicle such as a motor vehicle.

According to the power transmission chain and the power transmission system of the invention, since the straight-line portion of the pin is brought into surface abutment with the straight-line portion of the opening at the time of press fitting, the pin is prevented from moving out of its designed proper position relative to the link at the time of press fitting, whereby the assembling properties can be enhanced.

### BRIEF DESCRIPTION OF THE DRAWINGS

Fig. 1 is a plan view showing part of an embodiment of a power transmission chain according to the invention.
Fig. 2 is an enlarge perspective view of the power transmission chain.
Fig. 3 is an enlarged side view of a link.
Fig. 4 is an enlarged side view showing a characteristic portion.
Fig. 5 is a front view showing a state in which the power transmission chain is mounted on a pulley.
Fig. 6 is a perspective view showing a continuously variable transmission.

### DETAILED DESCRIPTION OF THE PREFERRED EMBODIMENTS

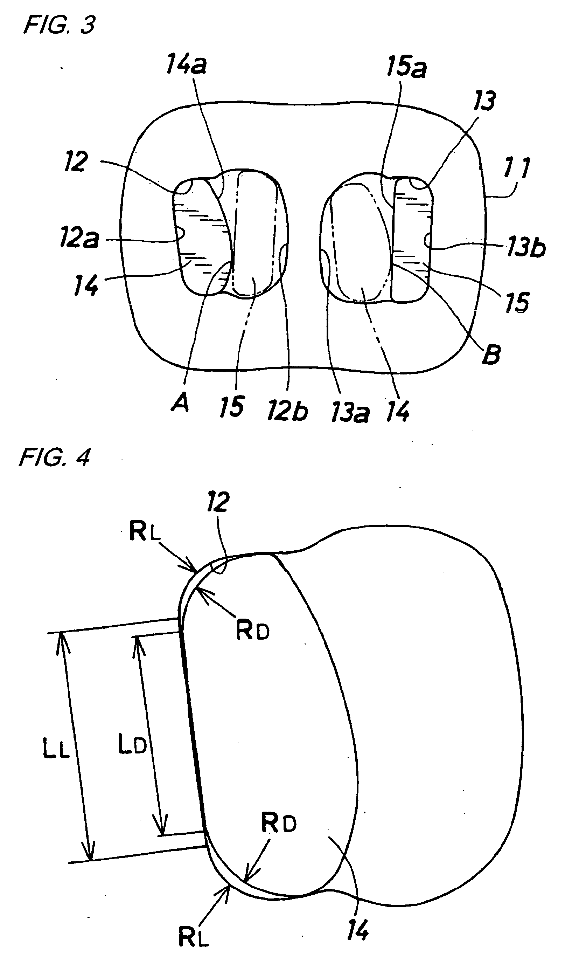

Hereinafter, an embodiment of the invention will be described by reference to the drawings. In the following description, when discussed about a vertical orientation, a vertical orientation shown in Fig. 3 is to be referred to.

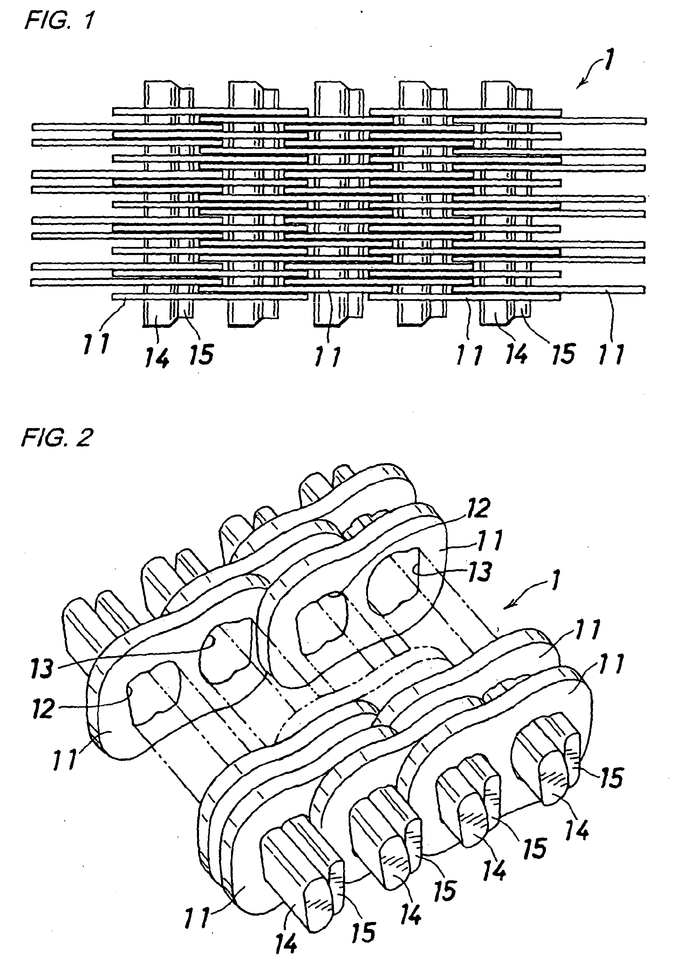

Figs. 1 and 2 show part of a power transmission chain according to the invention, respectively, and the power transmission chain (1) has a plurality of links (11) each having front opening (first opening) (12) and a rear opening (13) which are provided with a predetermined interval provided therebetween in a longitudinal direction of the chain, and a plurality of pins (first pins) (14) and a plurality of inter-pieces (second pins) (15) which are adapted to connect together the links (11) which are arranged in a width direction of the chain such that one link can flex to one other link in the longitudinal direction.

As is shown in Fig. 3, the front opening (12) is made up of a pin fixing portion (12a) where a pin (14) (shown by a solid line) is fixed and an inter-piece movable portion (12b) where an inter-piece (15) (shown by a chain double-dashed line) is movably fitted, while the rear opening (13) is made up of a pin movable portion (13a) where a pin (14) (shown by a chain double-dashed line) is movably fitted and an inter-piece fixing portion (13b) where an inter-piece (15) (shown by a solid line) is fixed. In addition, when connecting together links (11) which are arranged in a width direction of the chain, the links (11) are overlapped in such a manner that a front opening (12) of one link (11) coincides with a rear opening (13) of one other link (11), a pin (14) is fixed in the front opening (12) of the one link (11) and is movably fitted in the rear opening (13) of the one other link (11), while an inter-piece (15) is movably fitted in the front opening (12) of the one link (11) and is fixed in the rear opening (13) of the one other link (11) . Then, a longitudinal direction (a back and forth direction) flexure of the one link to the one other link is enabled through relative rolling contact motion between the pin (14) and the inter-piece (15).

A locus of a contact position between the pin (14) and the inter-piece (15) based on the pin (14) is made to take the form of an involute of a circle, and in this embodiment, a contact surface (14a) of the pin (14) is made to have, in its cross section, an involute shape having a basic circle of a radius and a center, and a contact surface (15a) of the inter-piece (15) is formed into a flat surface (a straight line in its cross section) . By this configuration, when each link (11) moves from a straight-line portion to a circular arc portion or the circular arc portion to the straight-line portion of the chain (1), in the front opening (12), the inter-piece 15 moves in the inter-piece movable portion (12b) with the contact surface (15a) thereof being in rolling contact (a slight sliding contact being included) with the contact surface (14a) of the pin (14) which is in the fixed state, while in the rear opening (13), the pin (14) moves in the pin movable portion (13a) with the contact surface (14a) thereof being in rolling contact (a slight sliding contact being included) with the contact surface (15a) of the inter-piece (15). In addition, in Fig. 3, portions indicated by reference characters A and B are a line (a point in cross section) where the pin (14) and the inter-piece (15) are in contact with each other on the straight-line portion of the chain (1), and a distance between A and B is a pitch.

The chain (1) is formed by connecting together a plurality of link units in a traveling direction (the back and forth direction), each link unit being made up of three link rows arranged in the traveling direction, and each link row being made up of a plurality of links arranged in the width direction in the same phase. In this embodiment, one link unit is made up of one link row made up of nine links and two link rows each made up of eight links.

The power transmission chain (1) is manufactured by holding perpendicularly required numbers of pins (14) and inter-pieces (15) on a table and thereafter press fitting a link (11) or links (11) altogether thereon at a time.

As is shown in Fig. 4, the pin (14) and the opening (12) in which the pin (14) is fixed have in their cross sections straight-line portions (L_{D}) (L_{L}) and circular arc portions (R_{D}) (R_{L}) which connect respectively to upper and lower ends of the straight-line portions (L_{D}) (L_{L}), respectively. Press fit margins are provided between the corresponding circular arc portions (R_{D}) (R_{L}), respectively, and the size of the press fit margins so provided is made to be in the range of 0.005 mm to 0.1 mm.

In order to prevent the occurrence of a positional deviation at the time of press fitting, letting the length of the straight-line portion (L_{D}) of the pin (14) be L_{D} and the length of the straight-line portion (L_{L}) of the opening (12) be L_{L}, L_{L} ≧ L_{D}, and letting the radius of the circular arc portions (R_{D}) which connect to the upper and lower ends of the pin (14) be R_{D} and the radius of the circular arc portions (R_{L}) which connect to the upper and lower ends of the opening (12) be R_{L}, R_{L} < R_{D}.

As a result of this, a slight gap is produced between an inner edge of the opening (12) and the pin (14) at each of boundary portions between the straight-line portions (L_{D}) (L_{L}) and the circular arc portions (R_{D}) (R_{L}) (in Fig. 4, the slight gap so produced being illustrated in an exaggerated fashion), whereby a maximum press fit margin is provided not at each of central portions of the circular arc portions (R_{D}) (R_{L}) but at each of rearward portions of upper and lower edges of the pin (14). Because of this, a force that is to be applied from the link (11) to the pin (14) at the time of press fitting is applied in a direction in which the straight-line portions (L_{D}) (L_{L}) of the pin (14) and the opening (12) are brought into surface abutment with each other. Consequently, the pin (14) which is press fitted in the opening (12) is pushed against the straight-line portion (L_{L}) of the opening (12) on the straight-line portion (L_{D}) and is then positioned relative to the link (11) in an ensured fashion, whereby the pin (14) is prevented from being caused to move out of, its designed proper position relative to the link (11). Note that while the same reference characters are used for the upper and lower circular arc portions (R_{D}) (R_{L}) as a matter of conveniences, it does not mean that the upper and lower circular arc portions (R_{D}) (R_{L}) have the same dimensions.

The press fit margin portions may only have to be formed such that the force applied to the pin (14) from the link (11) at the time of press fitting is applied in the direction in which the straight-line portions (L_{D}) (L_{L}) are brought into surface abutment with each other, the shape of the upper and lower edge portions of the pin (14) and the shape of the opening (12) which corresponds thereto may be such that they may each be made up of only one circular arc portion R or a multiplicity of circular arc portions R.

In the power transmission chain, while a polygonal motion is produced by repetition of the vertical motion of the pin to thereby cause noise, due to the pin (14) and the inter-piece (15) moving to produce the relative rolling contact motion therebetween and the locus of the contact position between the pin (14) and the inter-piece (15) with respect to the pin (14) being cause to take the involute of the circle, vibrations can be made smaller to thereby reduce the noise, compared to a case where contact surfaces of both the pin and the inter-piece are circular arc surfaces.

Although the power transmission chain described above is used on a CVT as shown in Fig. 6, in this case, as is shown in Fig. 5, the inter-piece (15) is made shorter than the pin (14), the end faces of the pin (14) are brought into contact with circular conical sheave surfaces (2c) (2d) of the fixed sheave (2a) and the movable sheave (2b) of the pulley (2) in such a state that the end faces of the inter-piece (15) are not in contact with the circular conical sheave surfaces (2c) (2d), and power is transmitted by virtue of frictional force generated by the contact. Since the pin (14) and the inter-piece (15) move to produce the rolling contact motion as has been described above, the pin (14) rarely rotates relative to the sheave surfaces (2c) (2d) of the pulley (2), whereby friction loss is reduced, and a high power transmissibility can be secured.

In the above embodiment of the invention, the pin (first pin) (14) which is brought into contact with a sheave surface is located on the front side of the inter piece (second pin) (15) which is not brought into contact with the sheave surface. The opening (12) in which the pin (14) is fixed is referred to the "front opening" and the opening (13) in which the inter piece (15) is fixed is referred to the "rear opening". However, the rotating direction of the power transmission chain is not specifically limited in the invention in terms of positions or shapes of the pins, inter piece, and openings. Further, it is not specifically limited about either of the first pin or the second pin is brought into contact with the sheave surface in the power transmission system of the invention.

## Claims

1. A power transmission chain (1) comprising:
a plurality of links (11) each having a first opening (12) and a second opening (13) which are arranged along a chain longitudinal direction and through which pins (14, 15) are to be passed; and
plural pairs of first pins (14) and second pins (15), in each pair of which the first pin (14) and the second pin (15) are arranged along the chain longitudinal direction and couple adjacent two of the links (11) overlapped in a chain width direction such that the first opening (12) of one of said adjacent two links (11) coincides with the second opening (13) of the other of said adjacent two links (11);
wherein the first pin (14) is fixed in the first opening (12) of said one link (11) and movably fitted in the second opening (13) of the other link (11), and the second pin (15) is movably fitted in the first opening (12) of said one link (11) and fixed in the second opening (13) of the other link (11), and the first pin (14) and the second pin (15) are in contact with each other with a relative rolling contact motion, so that said adjacent two links (11) are pivotally bendable in the chain longitudinal direction, and
wherein each of the first pin (14) and the first opening (12) has a part of a cross section thereof which is defined by a straight-line portion and circular arc portions which connect to upper and lower ends of the straight-line portion, and
**characterized in that**:
a press fit margin is provided between the matching circular arc portions of the first pin (14) and the first opening (12), such that a length L_{D} of the straight-line portion of the first pin(14) and a length L_{L} of the straight-line portion of the first opening (12) satisfy L_{L} ≥ L_{D}, so that a force applied from the corresponding link (11) to the first pin (14) at the time of press fit is applied in a direction in which the straight-line portions are brought into surface abutment with each other.

2. A power transmission chain (1) according to claim 1, wherein a radius R_{D} of one of the circular arc portions which connect to the upper and lower ends of the straight portion of the first pin (14), and a radius R_{L} of one of the circular arc portions which connect to the upper and lower ends of the straight portion of the first opening (12) satisfy R_{L} < R_{D}.

3. A power transmission system comprising a first pulley (2) having sheave surfaces which are each formed into a circular conical surface, a second pulley (3) having sheave surfaces which are each formed into a circular conical surface and a power transmission chain (1) which is provided so as to be extended between the first and second pulleys (1, 2), wherein the power transmission chain is the power transmission chain (1) set forth in claim 1.

## Patentansprüche

1. Kraftübertragungskette (1), umfassend:
eine Vielzahl von Gliedern (11), jeweils mit einer ersten Öffnung (12) und einer zweiten Öffnung (13), die entlang einer Kettenlängsrichtung angeordnet sind und durch welche Stifte (14, 15) hindurchzuführen sind; und
viele Paare von ersten Stiften (14) und zweiten Stiften (15), wobei in jedem Paar der ersten Stift (14) und der zweite Stift (15) entlang der Kettenlängsrichtung angeordnet sind und zwei benachbarte der Glieder (11) verbinden, die in einer Richtung der Breite der Kette überlappen, so dass die erste Öffnung (12) eines der benachbarten zwei Glieder (11) mit der zweiten Öffnung (13) des anderen der benachbarten zwei Glieder (11) übereinstimmt;
wobei der erste Stift (14) in der ersten Öffnung (12) des einen Glieds (11) fixiert ist und beweglich in der zweiten Öffnung (13) des anderen Glieds (11) eingepasst ist, und der zweite Stift (15) beweglich in der ersten Öffnung (12) des einen Glieds (11) eingepasst ist und in der zweiten Öffnung (13) des anderen Glieds (11) fixiert ist, und der erste Stift (14) und der zweite Stift (15) mit einer relativen Wälzkontaktbewegung miteinander in Kontakt stehen, so dass zwei benachbarte Glieder (11) in der Kettenlängsrichtung drehend biegbar sind, und
wobei der erste Stift (14) wie auch die erste Öffnung (12) einen Teil eines Querschnitts davon aufweist, der durch einen geradlinigen Bereich und kreisförmige Bogenbereiche definiert ist, welche die oberen und unteren Enden des geradlinigen Bereichs verbinden, und
**dadurch gekennzeichnet, dass**:
eine Presspassungstoleranz zwischen den zusammenpassenden kreisförmigen Bogenbereichen des ersten Stifts (14) und der ersten Öffnung (12) vorgesehen ist, so dass eine Länge L_{D} des geradlinigen Bereichs des ersten Stifts (14) und eine Länge L_{L} des geradlinigen Bereichs der ersten Öffnung (12) L_{L} ≥ L_{D} erfüllen, so dass eine vom entsprechenden Glied (11) auf den ersten Stift (14) zum Zeitpunkt der Presspassung aufgebrachte Kraft in einer Richtung aufgebracht wird, in der die geradlinigen Bereiche in Oberflächenanlage zueinander gebracht werden.

2. Kraftübertragungskette (1) nach Anspruch 1, wobei ein Radius R_{D} des einen der kreisförmigen Bogenbereiche, die mit den oberen und unteren Enden des geraden Bereichs des ersten Stifts (14) verbunden sind, und ein Radius R_{L} des einen der kreisförmigen Bogenbereiche, die mit den oberen und unteren Enden des geraden Bereichs der ersten Öffnung (12) verbunden sind, R_{L} < R_{D} erfüllen.

3. Kraftübertragungssystem, umfassend eine erste Riemenscheibe (2) mit Scheibenoberflächen, die jeweils zu einer kreisförmigen konischen Oberfläche ausgebildet sind, eine zweite Riemenscheibe (3) mit Scheibenoberflächen, die jeweils zu einer kreisförmigen konischen Oberfläche ausgebildet sind, und eine Kraftübertragungskette (1), die so vorgesehen ist, dass sie sich zwischen der ersten und zweiten Riemenscheibe (1, 2) erstreckt, wobei die Kraftübertragungskette die in Anspruch 1 dargelegte Kraftübertragungskette (1) ist.

## Revendications

1. Chaîne de transmission de puissance (1) comprenant :
une pluralité de biellettes (11), chacune comportant une première ouverture (12) et une seconde ouverture (13) qui sont agencées suivant une direction longitudinale de chaîne et à travers lesquelles des broches (14, 15) doivent pouvoir passer ; et
plusieurs paires de première broche (14) et de seconde broche (15), dans chaque paire desquelles la première broche (14) et la seconde broche (15) sont agencées suivant la direction longitudinale de chaîne et couplent deux des biellettes adjacentes (11) en recouvrement dans une direction transversale de chaîne de telle sorte que la première ouverture (12) de l'une desdites deux biellettes adjacentes (11) coïncide avec la seconde ouverture (13) de l'autre desdites deux biellettes adjacentes (11) ;
dans laquelle la première broche (14) est fixée sur la première ouverture (12) de ladite première biellette (11) et assemblé de manière à pouvoir se déplacer dans la seconde ouverture (13) de l'autre biellette (11), et la seconde broche (15) est assemblée de manière à pouvoir se déplacer dans la première ouverture (12) de ladite première biellette (11) et fixée dans la seconde ouverture (13) de l'autre biellette (11), et la première broche (14) et la seconde broche (15) sont en contact l'une avec l'autre avec un mouvement de contact de roulement relatif, de telle sorte que lesdites deux biellettes adjacentes (11) peuvent être courbées par pivotement dans la direction longitudinale de chaînes, et
dans laquelle chacune de la première broche (14) et de la première ouverture (12) comporte une partie de sa section transversale qui est définie par une partie rectiligne et des parties en arc circulaire qui sont raccordées aux extrémités supérieures et inférieures de la partie rectiligne, et
**caractérisée en ce que** :
une marge d'assemblage à force est formée entre les parties en arc circulaire conjuguées de la première broche (14) et de la première ouverture (12), de telle sorte qu'une longueur L_{D} de la partie rectiligne de la première broche (14) et une longueur L_{L} de la partie rectiligne de la première ouverture (12) satisfont la relation L_{L ≥} L_{D}, de telle sorte qu'un effort appliqué à partir de la biellette correspondante (11) sur la première broche (14) au moment de l'assemblage à force est appliqué dans une direction dans laquelle les parties rectilignes sont amenées en butée surfacique l'une sur l'autre.

2. Chaîne de transmission de puissance (1) selon la revendication 1, dans laquelle un rayon R_{D} de l'une des parties en arc circulaire qui est reliée aux extrémités supérieure et inférieure de la partie rectiligne de la première broche (14), et un rayon R_{L} de l'une des parties en arc circulaire qui est reliée aux extrémités supérieure et inférieure de la partie rectiligne de la première ouverture (12) satisfont la relation R_{L} < R_{D}.

3. Dispositif de transmission de puissance comprenant une première poulie (2) comportant des surfaces de gorge qui sont chacune formées en une surface conique circulaire, une seconde poulie (3) comportant des surfaces de gorge qui sont chacune formées sur une surface conique circulaire et une chaîne de transmission de puissance (1) qui est agencée de manière à pouvoir être étendue entre la première et la seconde poulies (1, 2), dans lequel la chaîne de transmission de puissance est la chaîne de transmission de puissance (1) selon la revendication 1.
